# FASCICULE DE BREVET EUROPEEN

(11) **EP 3 081 496 B1**
(45) Date de publication et mention de la délivrance du brevet: **08.11.2017**
(21) Numéro de dépôt: 16165409.0
(22) Date de dépôt: 14.04.2016
(51) Int. Cl.: B64G 1/64, B64G 1/10

(54) **PROCÉDÉ D'AMÉNAGEMENT D'UNE PLURALITÉ DE VAISSEAUX SPATIAUX SOUS LA COIFFE D'UN LANCEUR, ASSEMBLAGE RÉSULTANT D'UN TEL PROCÉDÉ ET DISPENSER ADAPTÉ À UN TEL ASSEMBLAGE**
VERFAHREN ZUR AUSSTATTUNG EINER VIELZAHL VON RAUMFAHRZEUGEN UNTER DER NUTZLASTVERKLEIDUNG EINER TRÄGERRAKETE, AUS DIESEM VERFAHREN HERVORGEHENDE MONTAGE UND GEEIGNETER DISPENSER FÜR EINE SOLCHE MONTAGE
METHOD FOR PROVIDING A PLURALITY OF SPACECRAFT UNDER THE FAIRING OF A LAUNCHER, ASSEMBLY RESULTING FROM SUCH A METHOD AND DISPENSER ADAPTED TO SUCH AN ASSEMBLY

(30) Priorité: 17.04.2015 FR 1500801
(43) Date de publication de la demande: 19.10.2016
(73) Titulaire: THALES, 92400 Courbevoie (FR)
(72) Inventeur: FERNANDEZ, Gilles, 31100 TOULOUSE (FR); SOST, Jean-Claude, 31100 TOULOUSE (FR)
(74) Mandataire: Priori, Enrico

(56) Documents cités:
- US-A- 5 199 672
- US-A- 5 271 582

## Description

L'invention relève du domaine de l'astronautique, et plus particulièrement du lancement de vaisseaux spatiaux tels que des satellites artificiels. Plus particulièrement elle porte sur un procédé d'aménagement d'une pluralité de vaisseaux spatiaux sous la coiffe d'un lanceur, sur un assemblage pouvant résulter d'un tel procédé et sur un dispenser de vaisseaux spatiaux adapté à la réalisation d'un tel assemblage.

L'invention s'applique notamment au lancement simultané d'une pluralité de satellites artificiels destinés à former une constellation.

Afin de réaliser des constellations comprenant un grand nombre de satellites artificiels identiques de petites dimensions (masse typiquement inférieure à 500 kg, voire à 200 kg), il est connu de procéder à des lancements groupés. Plusieurs satellites, voire plusieurs dizaines dans certains cas, doivent alors être agencés sous la coiffe d'un même lanceur pour être mis en orbite simultanément. Ces satellites sont fixés à un « dispenser », qui est un élément tubulaire placé le long de l'axe de la coiffe du lanceur, équipé d'interfaces mécaniques pour l'arrimage des satellites ; on obtient ainsi un assemblage rigide qui peut être considéré comme constituant la charge utile du lanceur. Dans l'espace, après libération de cet assemblage, des charges pyrotechniques désolidarisent les satellites du dispenser. En outre des « doigts d'éjection » à ressort, intégrés dans les interfaces mécaniques, impartissent aux satellites une poussée dans une direction radiale, de manière à dispersé la grappe de satellites qui vient d'être libérée.

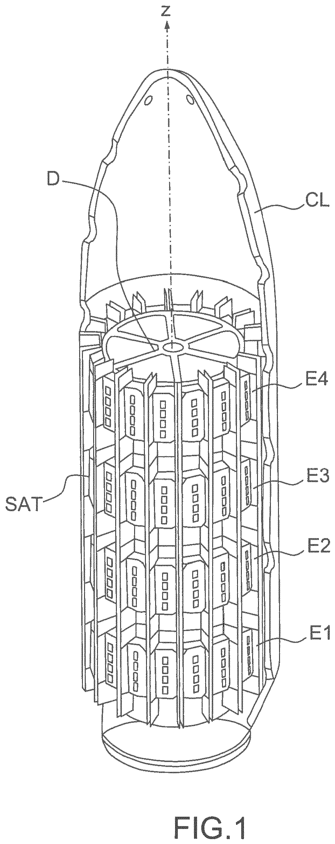

La figure 1 montre un assemblage de satellites SAT sous la coiffe CL d'un lanceur selon l'art antérieur. Le dispenser D présente une forme cylindrique, avec un axe z coïncidant avec l'axe longitudinal de la coiffe. Les satellites sont agencés sur la surface du dispenser, où ils forment une pluralité d'étages E1, E2, E3, E4 alignés dans la direction axiale, ou longitudinale. Chaque étage est constitué par un anneau de satellites - 18 dans l'exemple considéré - entourant le dispenser. Les satellites des différents étages sont alignés dans la direction longitudinale, bien que cela ne soit pas essentiel. Dans l'exemple de la figure 1, des cloisons radiales sont prévues pour séparer les satellites de chaque étage, mais cela est optionnel.

L'agencement de la figure 1 permet le lancement groupé de 72 satellites, à condition que leur volume soit suffisamment réduit pour respecter les contraintes d'encombrement de la coiffe. Dans le cas d'un lanceur Falcon 9, cela présuppose que les dimensions de chaque satellite n'excèdent pas 1000x500x500mm. Si les satellites sont de taille plus importante, il est nécessaire d'en réduire le nombre et donc, pour une constellation donnée, à augmenter le nombre de lancements, ce qui entraîne un surcout très important.

D'autres assemblages de satellites sous coiffe sont décrit, entre autres, par les documents US 5,199,672 et US 5,271,582. Ils présentent le même inconvénient que l'assemblage de la figure 1, à savoir une utilisation peu efficace du volume de stockage disponible.

L'invention vise à permettre une utilisation plus efficiente du volume disponible sous coiffe, et donc à augmenter le nombre de satellites pouvant être lancés simultanément ou - de manière équivalente - à relâcher les contraintes sur leurs dimensions.

Conformément à l'invention ce but est atteint en agençant les satellites en deux couches autour du dispenser, et en utilisant un dispenser modifié présentant des interfaces mécaniques d'au moins deux types différents, se distinguant par leur extension radiale.

Ainsi, un objet de l'invention est un procédé d'aménagement d'une pluralité de vaisseaux spatiaux sous la coiffe d'un lanceur, comprenant les étapes suivantes :
- agencer une première couche de vaisseaux spatiaux autour d'un dispenser ayant un axe longitudinal ;
- fixer les vaisseaux spatiaux de ladite première couche audit dispenser au moyen d'interfaces mécaniques s'étendant dans une direction radiale ;
- agencer une deuxième couche de vaisseaux spatiaux autour de ladite première couche et dudit dispenser, les vaisseaux spatiaux de ladite deuxième couche étant agencés de manière à dépasser, dans une direction longitudinale de ladite coiffe, des vaisseaux spatiaux de la première couche qui s'interposent entre eux et le dispenser ;
- fixer les vaisseaux spatiaux de ladite deuxième couche audit dispenser au moyen d'interfaces mécaniques s'étendant dans une direction radiale sur une distance supérieure à celle des interfaces mécaniques de la première couche ; et
- agencer l'assemblage ainsi obtenu, comprenant le dispenser et les vaisseaux spatiaux, sous la coiffe d'un lanceur avec l'axe longitudinal du dispenser aligné avec celui de la coiffe.

Selon des modes de réalisation particuliers d'un tel procédé :
- Tant ladite première couche que ladite deuxième couche peuvent comprendre une pluralité d'étages espacés dans une direction longitudinale du dispenser, chaque dit étage étant constitué d'une pluralité de vaisseaux spatiaux agencés en anneau autour dudit dispenser, chaque étage de ladite deuxième couche entourant un étage correspondant de ladite première couche.
- Lesdits vaisseaux spatiaux peuvent être sensiblement identiques entre eux, les vaisseaux spatiaux de la deuxième couche étant tournés par rapport à ceux de la première couche autour d'axes respectifs orientés radialement. Plus particulièrement, lesdits vaisseaux spatiaux peuvent présenter une forme allongée selon un axe dit principal et les vaisseaux spatiaux de la première couche peuvent être agencés avec leur axe principal orienté dans une direction longitudinale du dispenser et ceux de la deuxième couche être agencés avec leur axe principal orienté perpendiculairement à la direction longitudinale du dispenser.

Un autre objet de l'invention est un assemblage de vaisseaux spatiaux comprenant un premier ensemble de vaisseaux spatiaux agencés autour d'un dispenser présentant un axe dit longitudinal pour former une première couche de vaisseaux spatiaux, lesdits vaisseaux spatiaux étant fixés audit dispenser au moyen d'interfaces mécaniques s'étendant dans une direction radiale à partir dudit dispenser ; caractérisé en ce qu'il comprend également un deuxième ensemble de vaisseaux spatiaux agencés autour de ladite première couche et dudit dispenser pour former une deuxième couche de vaisseaux spatiaux, les vaisseaux spatiaux de ladite deuxième couche étant agencés de manière à dépasser, dans la direction dudit axe longitudinal, des vaisseaux spatiaux de la première couche qui s'interposent entre eux et le dispenser et étant fixés audit dispenser au moyen d'interfaces mécaniques s'étendant dans ladite direction radiale sur une distance supérieure à celle des interfaces mécaniques de la première couche.

Selon des modes de réalisation particuliers d'un tel assemblage :
- Tant ladite première couche que ladite deuxième couche de vaisseaux spatiaux peuvent comprendre une pluralité d'étages espacés dans la direction dudit axe longitudinal du dispenser, chaque dit étage étant constitué d'une pluralité de vaisseaux spatiaux agencés en anneau autour dudit dispenser, chaque étage de ladite deuxième couche entourant un étage correspondant de ladite première couche.
- Lesdits vaisseaux spatiaux peuvent être sensiblement identiques entre eux, les vaisseaux spatiaux de la deuxième couche étant tournés par rapport à ceux de la première couche autour d'axes respectifs orientés radialement. Plus particulièrement, lesdits vaisseaux spatiaux peuvent présenter une forme allongée selon un axe dit principal et les vaisseaux spatiaux de la première couche peuvent être agencés avec leur axe principal orienté dans une direction longitudinale du dispenser et ceux de la deuxième couche être agencés avec leur axe principal orienté perpendiculairement à la direction longitudinale du dispenser.

Encore un autre objet de l'invention est un dispenser de vaisseaux spatiaux, adapté pour la mise en oeuvre d'un tel procédé et pour la réalisation d'un tel assemblage, comprenant un corps central de forme allongée selon un axe dit longitudinal et une pluralité d'interfaces mécaniques pour l'arrimage de vaisseaux spatiaux s'étendant radialement à partir dudit corps central, lesdites interfaces mécaniques étant agencées en étages espacés longitudinalement, caractérisé en ce qu'il présente une alternance d'ensembles d'étages d'interfaces mécaniques s'étendant radialement sur une première distance et d'ensembles d'étages d'interfaces mécaniques s'étendant radialement sur au moins une deuxième distance, supérieure à ladite première distance.

D'autres caractéristiques, détails et avantages de l'invention ressortiront à la lecture de la description faite en référence aux dessins annexés donnés à titre d'exemple et qui représentent, respectivement :
- La figure 1, décrite plus haut, un assemblage de vaisseaux spatiaux sous coiffe selon l'art antérieur ;
- Les figures 2A et 2B, un étage d'un assemblage de vaisseaux spatiaux selon un mode de réalisation de l'invention ;
- Les figures 3A et 3B, un dispenser de vaisseaux spatiaux selon un mode de réalisation de l'invention ; et
- Les figures 4A et 4B, deux assemblages de vaisseaux spatiaux selon des modes de réalisation respectifs de l'invention.

Dans la suite, on entendra par « direction longitudinale » (ou « axe longitudinal ») une direction (respectivement, un axe) parallèle à l'axe du dispenser (et de la coiffe), et donc à la direction d'avancement du lanceur. On entend par « direction radiale » la direction d'une ligne partant de l'axe du dispenser et s'étendant perpendiculairement à la direction longitudinale.

Le terme « vaisseau spatial » peut désigner un satellite artificiel ou tout autre engin destiné à évoluer dans l'espace, tel qu'une sonde interplanétaire. Dans la suite, les termes « satellite » et « vaisseau spatial » seront utilisés de manière interchangeable.

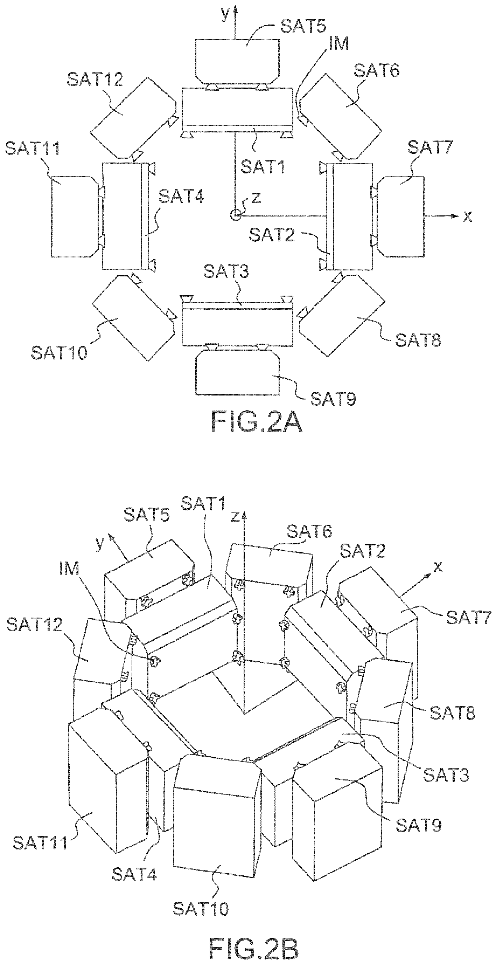

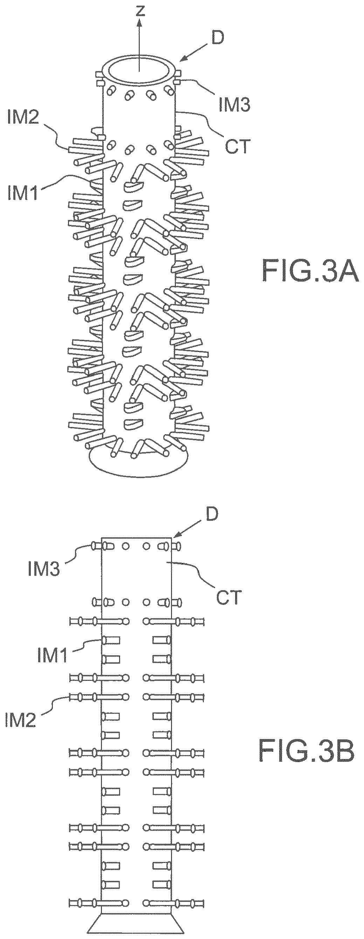

Les figures 2A et 2B sont, respectivement, une vue en plan et en élévation d'un étage composant un assemblage de vaisseaux spatiaux selon un mode de réalisation de l'invention. Cet étage comprend 12 vaisseaux spatiaux - typiquement des satellites - identiques, désignés par les références SAT1 à SAT12. Ces satellites présentent une forme allongée, approximativement en pavé droit. Le dispenser n'est pas représenté pour ne pas surcharges les figures. On peut voir que les satellites sont agencés de manière à former deux anneaux concentriques : un anneau interne, formé par les satellites SAT1 à SAT4, qui sont agencés avec leur dimension principale (c'est-à-dire leur côté le plus long) orientée dans une direction dite tangentielle, qui est perpendiculaire tant à l'axe z de la coiffe qu'à une direction radiale du plan x,y ; et un anneau externe, formé par les satellites SAT5 à SAT12, qui sont agencés avec leur dimension principale orientée dans une direction longitudinale, c'est-à-dire parallèle à l'axe z. En d'autres termes, les satellites de l'anneau extérieur sont tournés de 90° autour d'un axe orienté radialement par rapport à ceux de l'anneau intérieur. Cette rotation permet aux satellites de l'anneau externe d'être fixés au dispenser par des interfaces mécaniques IM - représentées seulement partiellement sur les figures 2A, 2B et de manière plus complète sur les figures 3A, 3B. En effet, comme leur dimension principale s'étend dans une direction longitudinale, leurs interfaces mécaniques peuvent passer « au-dessus » et « au-dessous » des satellites de l'anneau interne dont la direction longitudinale s'étend dans un plan x-y perpendiculaire à cette direction longitudinale.

Comme dans le cas de la figure 1, un agencement de vaisseaux spatiaux selon l'invention peut comprendre une pluralité d'étages - généralement, mais pas nécessairement, identiques - espacés suivant la direction longitudinale (axe z) ; dans certains cas, cependant, l'agencement peut comprendre un seul étage. Ainsi, une couche de satellites est généralement formée par une pluralité d'anneaux de même rang espacés suivant l'axe z, mais peut parfois être constituée d'un seul anneau d'un étage unique.

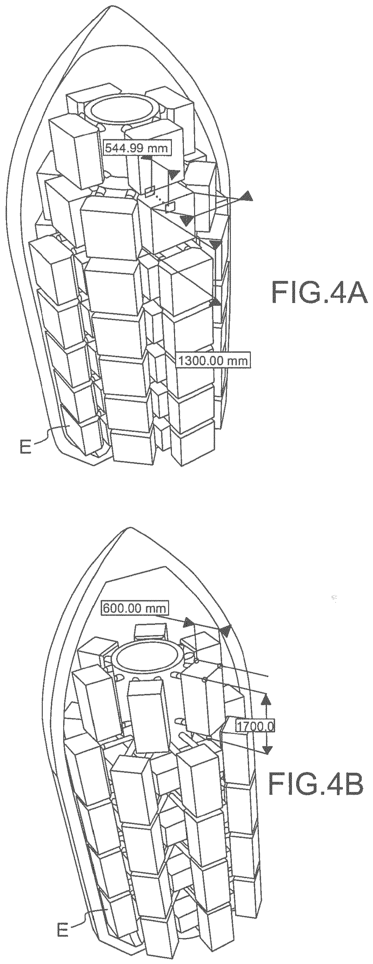

Les figures 3A et 3B sont des vues, respectivement en élévation et de face, d'un dispenser D convenant à la mise en oeuvre de l'invention. Ce dispenser comprend un corps tubulaire CT, dont l'axe z est destiné à être aligné avec celui de la coiffe du lanceur, sur la surface duquel sont fixées des interfaces mécaniques s'étendant dans une direction radiale. Ces interfaces sont de trois types : les interfaces IM1 s'étendent dans la direction radiale sur une distance relativement faible - typiquement de quelques centimètres : elles sont en effet destinées à la fixation des satellites de la première couche (SAT1 à SAT4 dans le mode de réalisation des figures 2A, 2B) ; les interfaces IM2 s'étendent dans la direction radiale sur une distance plus importante, typiquement de plusieurs décimètres : elles sont en effet destinées à la fixation des satellites de la deuxième couche (SAT5 à SAT12 dans le mode de réalisation des figures 2A, 2B). On comprend, au vu des figures 3A et 2B, que l'extension radiale des interfaces IM2 est au moins égale à celle des interfaces IM1 à laquelle s'ajoute la longueur du côté des satellites s'étendant dans la direction radiale (le plus petit côté dans le mode de réalisation des figures 2A et 2B). Ainsi, les interfaces IM2 présentent une forme de tige. A part cela, elles peuvent être tout à fait conventionnelles et comprendre, notamment, un dispositif pyrotechnique de libération des satellites et un doigt d'éjection. Il importe de noter que les interfaces IM2 ne doivent pas nécessairement avoir toutes la même longueur, même si cela simplifie la fabrication du dispenser. Par exemple, dans le mode de réalisation des figures 2A et 2B, les interfaces mécaniques IM2 associées aux satellites SAT5, SAT7, SAT9 et SAT 11 peuvent être légèrement plus longues que celles associées aux satellites SAT6, SAT8, SAT10 et SAT 12. Les interfaces IM3, qui peuvent être semblables ou identiques aux interfaces IM1, servent à la réalisation des étages les plus élevés de l'assemblage, qui seront décrits en référence aux figures 4A et 4B.

La structure en étages de l'assemblage se répercute sur l'agencement des interfaces mécaniques IM1 et IM2. Ainsi on peut identifier sur le dispenser des figures 3A et 3B une alternance d'ensembles d'étages d'interfaces mécaniques IM1 et IM2. Plus particulièrement, dans le mode de réalisation considéré (voir les figures 2A et 2B), chaque satellite est fixé à l'aide de quatre interfaces mécaniques en correspondance des coins de sa face rectangulaire orientée vers le dispenser. Ainsi, le dispenser D présente, sauf aux extrémités, une alternance de deux étages d'interfaces IM1 - deux fois plus nombreuses que les satellites de chaque étage de la couche interne - et de deux étages d'interface IM2 - deux fois plus nombreuses que les satellites de chaque étage de la couche internes.

La figure 4A illustre un assemblage selon un premier mode de réalisation de l'invention, pouvant être logé sous la coiffe d'un lanceur Falcon 9. Cet assemblage comprend 6 étages (référence E) de 12 satellites ayant la structure illustrée sur les figures 2A et 2B, plus un étage de type conventionnel, à une seule couche, comprenant 4 satellites fixés par les interfaces IM3 et logé dans la partie supérieure, plus étroite, de la coiffe. On peut donc lancer simultanément jusqu'à 76 satellites dont les dimensions peuvent atteindre 1300x980x545mm - c'est-à-dire un volume plus que double par rapport aux satellites de l'assemblage de la figure 1.

La figure 4B illustre un assemblage selon un deuxième mode de réalisation de l'invention, pouvant aussi être logé sous la coiffe d'un lanceur Falcon 9. Cet assemblage comprend 4 étages (référence E) de 12 satellites ayant la structure illustrée sur les figures 2A et 2B, plus un étage à une couche de 6 satellites, fixés par les interfaces IM3, logé dans la partie supérieure, plus étroite, de la coiffe. On peut donc lancer simultanément jusqu'à 54 satellites, et leurs dimensions peuvent atteindre 1700x780x600mm - c'est-à-dire un volume plus que triple par rapport aux satellites de l'assemblage de la figure 1.

La libération des satellites peut se faire comme dans l'art antérieur ; il faudra juste veiller à ce que les dispositifs pyrotechniques brisant les interfaces mécaniques IM2 de la couche externe soient déclenchés avant ceux des interfaces mécaniques IM1 de la couche interne.

L'invention a été décrite en référence à des modes de réalisation particuliers, mais sa portée est plus générale. Notamment :
- L'invention convient de manière générale à l'agencement sous coiffe, en vue de leur lancement simultané, d'une pluralité de vaisseaux spatiaux - typiquement mais pas nécessairement des satellites. Il n'est pas essentiel que ces vaisseaux spatiaux soient identiques entre eux, ni qu'ils soient destinés à former une constellation. Ils peuvent présenter des formes différentes de celles des modes de réalisation décrits, et il n'est pas toujours nécessaire que les vaisseaux spatiaux de la deuxième couche soient tournés de 90° par rapport à ceux de la première couche : cela dépend de la forme desdits vaisseaux spatiaux. Par exemple, si les vaisseaux spatiaux présentent une forme de pavé droit à base carrée avec une face carrée orientée vers le dispenser, une rotation de 90° serait inutile tandis qu'une rotation de 45° serait appropriée. Cette notion de rotation perd son intérêt si les vaisseaux spatiaux de la deuxième couche présentent une forme ou des dimensions différentes de ceux de la première couche. Par ailleurs, les différents étages peuvent présenter un décalage angulaires ; en d'autres termes chaque étage, ou seulement certains d'entre eux, peut être tourné d'un angle non nul autour de l'axe z par rapport aux étages adjacents.
- Les couches coaxiales de vaisseaux spatiaux peuvent présenter des structures différentes de celles décrites. En particulier, le nombre de vaisseaux spatiaux dans chaque étage et dans l'assemblage tout entier peut être différent de celui des exemples décrits en référence aux figures 2A/2B et 4A/4B.
- Le dispenser peut présenter une structure différente de celle décrite en référence aux figures 3A et 3B.
- Dans les modes de réalisation décrits, les vaisseaux spatiaux sont agencés sur exactement deux couches ; l'invention a toutefois une portée plus générale et comprends tous les agencements comprenant au moins deux couches. En effet, dans certains cas il peut être possible et opportun d'utiliser un agencement sur trois couches coaxiales, voire plus. Dans ce cas, les vaisseaux spatiaux des différentes couches seront fixés au dispenser avec des interfaces mécaniques s'étendant sur des distances radiales croissantes avec l'ordre de la couche.

## Revendications

1. Procédé d'aménagement d'une pluralité de vaisseaux spatiaux (SAT) sous la coiffe d'un lanceur (CL), comprenant les étapes suivantes :
- agencer une première couche de vaisseaux spatiaux (SAT1 - SAT4) autour d'un dispenser (D) ayant un axe longitudinal (z) ;
- fixer les vaisseaux spatiaux de ladite première couche audit dispenser au moyen d'interfaces mécaniques (IM1) s'étendant dans une direction radiale ;
- agencer une deuxième couche de vaisseaux spatiaux (SAT5 - SAT12) autour de ladite première couche et dudit dispenser, les vaisseaux spatiaux de ladite deuxième couche étant agencés de manière à dépasser, dans une direction longitudinale de ladite coiffe, des vaisseaux spatiaux de la première couche qui s'interposent entre eux et le dispenser ;
- fixer les vaisseaux spatiaux de ladite deuxième couche audit dispenser au moyen d'interfaces mécaniques (IM2) s'étendant dans une direction radiale sur une distance supérieure à celle des interfaces mécaniques de la première couche ; et
- agencer l'assemblage ainsi obtenu, comprenant le dispenser et les vaisseaux spatiaux, sous la coiffe d'un lanceur avec l'axe longitudinal du dispenser aligné avec celui de la coiffe.

2. Procédé selon la revendication 1 dans lequel tant ladite première couche que ladite deuxième couche comprennent une pluralité d'étages (E) espacés dans une direction longitudinale du dispenser, chaque dit étage étant constitué d'une pluralité de vaisseaux spatiaux agencés en anneau autour dudit dispenser, chaque étage de ladite deuxième couche entourant un étage correspondant de ladite première couche.

3. Procédé selon l'une des revendications précédentes dans lequel lesdits vaisseaux spatiaux sont sensiblement identiques entre eux, les vaisseaux spatiaux de la deuxième couche étant tournés par rapport à ceux de la première couche autour d'axes respectifs orientés radialement.

4. Procédé selon la revendication 3 dans lequel lesdits vaisseaux spatiaux présentent une forme allongée selon un axe dit principal et dans lequel les vaisseaux spatiaux de la première couche sont agencés avec leur axe principal orienté dans une direction longitudinale du dispenser et ceux de la deuxième couche sont agencés avec leur axe principal orienté perpendiculairement à la direction longitudinale du dispenser.

5. Assemblage de vaisseaux spatiaux comprenant un premier ensemble de vaisseaux spatiaux (SAT1 - SAT4) agencés autour d'un dispenser (D) présentant un axe dit longitudinal (z) pour former une première couche de vaisseaux spatiaux, lesdits vaisseaux spatiaux étant fixés audit dispenser au moyen d'interfaces mécaniques (IM1) s'étendant dans une direction radiale à partir dudit dispenser ; **caractérisé en ce qu'**il comprend également un deuxième ensemble de vaisseaux spatiaux (SAT5 - SAT12) agencés autour de ladite première couche et dudit dispenser pour former une deuxième couche de vaisseaux spatiaux, les vaisseaux spatiaux de ladite deuxième couche étant agencés de manière à dépasser, dans la direction dudit axe longitudinal, des vaisseaux spatiaux de la première couche qui s'interposent entre eux et le dispenser et étant fixés audit dispenser au moyen d'interfaces mécaniques (IM2) s'étendant dans ladite direction radiale sur une distance supérieure à celle des interfaces mécaniques de la première couche.

6. Assemblage de vaisseaux spatiaux selon la revendication 5 dans lequel tant ladite première couche que ladite deuxième couche de vaisseaux spatiaux comprennent une pluralité d'étages (E) espacés dans la direction dudit axe longitudinal du dispenser, chaque dit étage étant constitué d'une pluralité de vaisseaux spatiaux agencés en anneau autour dudit dispenser, chaque étage de ladite deuxième couche entourant un étage correspondant de ladite première couche.

7. Assemblage de vaisseaux spatiaux selon l'une des revendications 5 ou 6 dans lequel lesdits vaisseaux spatiaux sont sensiblement identiques entre eux, les vaisseaux spatiaux de la deuxième couche étant tournés par rapport à ceux de la première couche autour d'axes respectifs orientés radialement.

8. Assemblage de vaisseaux spatiaux selon la revendication 7 dans lequel lesdits vaisseaux spatiaux présentent une forme allongée selon un axe dit principal et dans lequel les vaisseaux spatiaux de la première couche sont agencés avec leur axe principal orienté dans une direction longitudinale du dispenser et ceux de la deuxième couche sont agencés avec leur axe principal orienté perpendiculairement à la direction longitudinale du dispenser.

9. Dispenser (D) de vaisseaux spatiaux adapté pour la mise en oeuvre d'un procédé selon l'une des revendications 1 à 4, comprenant un corps central (CT) de forme allongée selon un axe (z) dit longitudinal et une pluralité d'interfaces mécaniques (IM, IM1, IM2) pour l'arrimage de vaisseaux spatiaux s'étendant radialement à partir dudit corps central, lesdites interfaces mécaniques étant agencées en étages espacés longitudinalement, **caractérisé en ce qu'**il présente une alternance d'ensembles d'étages d'interfaces mécaniques (IM1) s'étendant radialement sur une première distance et d'ensembles d'étages d'interfaces mécaniques (IM2) s'étendant radialement sur au moins une deuxième distance, supérieure à ladite première distance.

## Patentansprüche

1. Verfahren zum Anordnen von mehreren Raumfahrzeugen (SAT) unter der Verkleidung einer Trägerrakete (CL), das die folgenden Schritte beinhaltet:
- Anordnen einer ersten Lage von Raumfahrzeugen (SAT1-SAT4) um einen Dispenser (D) mit einer Längsachse (z);
- Fixieren der Raumfahrzeuge der ersten Lage an dem Dispenser mittels mechanischer Schnittstellen (IM1), die in einer radialen Richtung verlaufen;
- Anordnen einer zweiten Lage von Raumfahrzeugen (SAT5-SAT12) um die erste Lage und den Dispenser, wobei die Raumfahrzeuge der zweiten Lage so angeordnet sind, dass sie in einer Längsrichtung der Verkleidung über Raumfahrzeuge der ersten Lage hinaus verlaufen, die sich zwischen diesen und dem Dispenser befinden;
- Fixieren der Raumfahrzeuge der zweiten Lage an dem Dispenser mittels mechanischer Schnittstellen (IM2), die in einer radialen Richtung über eine Distanz verlaufen, die größer ist als die der mechanischen Schnittstellen der ersten Lage; und
- Anordnen der so erhaltenen Baugruppe, die den Dispenser und die Raumfahrzeuge umfasst, unter der Verkleidung einer Trägerrakete, wobei die Längsachse des Dispensers mit der der Verkleidung ausgerichtet ist.

2. Verfahren nach Anspruch 1, bei dem sowohl die erste Lage als auch die zweite Lage mehrere in einer Längsrichtung des Dispensers beabstandete Stufen (E) umfassen, wobei jede Stufe durch mehrere Raumfahrzeuge gebildet wird, die in einem Ring um den Dispenser herum angeordnet sind, wobei jede Stufe der zweiten Lage eine entsprechende Stufe der ersten Lage umgibt.

3. Verfahren nach einem der vorherigen Ansprüche, bei dem die Raumfahrzeuge im Wesentlichen identisch miteinander sind, wobei die Raumfahrzeuge der zweiten Lage relativ zu denen der ersten Lage um jeweilige radial orientierte Achsen gedreht werden.

4. Verfahren nach Anspruch 3, bei dem die Raumfahrzeuge eine längliche Form entlang einer Achse, Hauptachse genannt, haben und bei dem die Raumfahrzeuge der ersten Lage mit ihrer Hauptachse in einer Längsrichtung des Dispensers orientiert angeordnet sind und die der zweiten Lage mit ihrer Hauptachse lotrecht zur Längsrichtung des Dispensers orientiert angeordnet sind.

5. Anordnung von Raumfahrzeugen, umfassend einen ersten Satz von Raumfahrzeugen (SAT-1-SAT4), die um einen Dispenser (D) mit einer Achse, Längsachse (z) genannt, angeordnet sind, zum Bilden einer ersten Lage von Raumfahrzeugen, wobei die Raumfahrzeuge an dem Dispenser mittels mechanischer Schnittstellen (IM1) fixiert sind, die sich in einer Längsrichtung von dem Dispenser erstrecken, **dadurch gekennzeichnet, dass** sie ferner einen zweiten Satz von Raumfahrzeugen (SAT5-SAT12) umfasst, die um die erste Lage und den Dispenser angeordnet sind, um eine zweite Lage von Raumfahrzeugen zu bilden, wobei die Raumfahrzeuge der zweiten Lage so angeordnet sind, dass sie in der Richtung der Längsachse über Raumfahrzeuge der ersten Lage hinaus verlaufen, die zwischen ihnen und dem Dispenser angeordnet sind, und an dem Dispenser mittels mechanischer Schnittstellen (IM2) fixiert sind, die in der radialen Richtung über eine Distanz verlaufen, die größer ist als die der mechanischen Schnittstellen der ersten Lage.

6. Anordnung von Raumfahrzeugen nach Anspruch 5, bei der sowohl die erste Lage als auch die zweite Lage von Raumfahrzeugen mehrere in der Richtung der Längsachse des Dispensers beabstandete Stufen (E) umfassen, wobei jede der Stufen von mehreren in einem Ring um den Dispenser angeordneten Raumfahrzeugen gebildet wird, wobei jede Stufe der zweiten Lage eine entsprechende Stufe der ersten Lage umgibt.

7. Anordnung von Raumfahrzeugen nach Anspruch 5 oder 6, bei der die Raumfahrzeuge im Wesentlichen identisch miteinander sind, wobei die Raumfahrzeuge der zweiten Lage relativ zu denen der ersten Lage um jeweilige radial orientierte Achsen herum gedreht sind.

8. Anordnung von Raumfahrzeugen nach Anspruch 7, bei der die Raumfahrzeuge eine längliche Form entlang einer Achse, Hauptachse, haben und bei der die Raumfahrzeuge der ersten Lage mit ihrer Hauptachse in einer Längsrichtung des Dispensers orientiert angeordnet sind und die Raumfahrzeuge der zweiten Lage mit ihrer Hauptachse lotrecht zur Längsrichtung des Dispensers orientiert angeordnet sind.

9. Dispenser (D) für Raumfahrzeuge, ausgelegt zum Implementieren eines Verfahrens nach einem der Ansprüche 1 bis 4, umfassend einen zentralen Körper (CT) von länglicher Form entlang einer Achse, Längsachse (z) genannt, und mehrere mechanische Schnittstellen (IM, IM1, IM2) zum Verstauen von sich radial von dem zentralen Körper erstreckenden Raumfahrzeugen, wobei die mechanischen Schnittstellen in longitudinal beabstandeten Stufen angeordnet sind, **dadurch gekennzeichnet, dass** er zwischen Sätzen von Stufen von mechanischen Schnittstellen (IM1), die radial über eine erste Distanz verlaufen, und Sätzen von Stufen von mechanischen Schnittstellen (IM2) abwechselt, die radial über wenigstens eine zweite Distanz verlaufen, die größer ist als die erste Distanz.

## Claims

1. A method for arranging a plurality of spacecraft (SAT) under the fairing of a launcher (CL), comprising the following steps:
- arranging a first layer of spacecraft (SAT1-SAT4) around a dispenser (D) having a longitudinal axis (z);
- fixing the spacecraft of said first layer to said dispenser by means of mechanical interfaces (IM1) extending in a radial direction;
- arranging a second layer of spacecraft (SAT5-SAT12) around said first layer and said dispenser, the spacecraft of said second layer being arranged so as to extend beyond, in a longitudinal direction of said fairing, the spacecraft of said first layer that are interposed between them and the dispenser;
- fixing the spacecraft of said second layer to said dispenser by means of mechanical interfaces (IM2) extending in a radial direction over a distance that is greater than that of the mechanical interfaces of the first layer; and
- arranging the resulting assembly, which comprises the dispenser and the spacecraft, under the fairing of a launcher with the longitudinal axis of the dispenser aligned with that of the fairing.

2. The method according to claim 1, wherein both said first layer and said second layer comprise a plurality of stages (E) spaced apart in a longitudinal direction of the dispenser, each of said stages being formed by a plurality of spacecraft arranged in a ring around said dispenser, each stage of said second layer surrounding a corresponding stage of said first layer.

3. The method according to any one of the preceding claims, wherein said spacecraft are substantially identical to each other, the spacecraft of the second layer being turned relative to those of the first layer around respective radially oriented layers.

4. The method according to claim 3, wherein said spacecraft have an elongated shape along an axis, called main axis, and wherein the spacecraft of the first layer are arranged with their main axis oriented in a longitudinal direction of the dispenser and the spacecraft of the second layer are arranged with their main axis oriented perpendicular to the longitudinal direction of the dispenser.

5. An assembly of spacecraft comprising a first set of spacecraft (SAT1-SAT4) arranged around a dispenser (D) having an axis, called longitudinal axis (z), for forming a first layer of spacecraft, said spacecraft being fixed to said dispenser by means of mechanical interfaces (IM1) extending in a radial direction from said dispenser, **characterised in that** it further comprises a second set of spacecraft (SAT5-SAT12) arranged around said first layer and said dispenser so as to form a second layer of spacecraft, the spacecraft of said second layer being arranged so as to extend beyond, in the direction of said longitudinal axis, the spacecraft of the first layer that are interposed between them and the dispenser and being fixed to said dispenser by means of mechanical interfaces (IM2) extending in said radial direction over a distance that is greater than that of the mechanical interfaces of the first layer.

6. The assembly of spacecraft according to claim 5, wherein both said first layer and said second layer of spacecraft comprise a plurality of stages (E) spaced apart in the direction of said longitudinal axis of the dispenser, each of said stages being formed by a plurality of spacecraft arranged in a ring around said dispenser, each stage of said second layer surrounding a corresponding stage of said first layer.

7. The assembly of spacecraft according to any one of claims 5 to 6, wherein said spacecraft are substantially identical to each other, the spacecraft of the second layer being turned relative to those of the first layer around respective radially oriented axes.

8. The assembly of spacecraft according to claim 7, wherein said spacecraft have an elongated shape along an axis, called main axis, and wherein the spacecraft of the first layer are arranged with their main axis oriented in a longitudinal direction of the dispenser and the spacecraft of the second layer are arranged with their main axis oriented perpendicular to the longitudinal direction of the dispenser.

9. A spacecraft dispenser (D) adapted to implement a method according to any one of claims 1 to 4, comprising a central body (CT) of elongated shape along an axis, called longitudinal axis (z), and a plurality of mechanical interfaces (IM, IM1, IM2) for stowing spacecraft extending radially from said central body, said mechanical interfaces being arranged in stages that are longitudinally spaced apart, **characterised in that** it alternates between sets of stages of mechanical interfaces (IM1) extending radially over a first distance and sets of stages of mechanical interfaces (IM2) extending radially over at least one second distance that is greater than said first distance.
